Europäisches Patentamt

European Patent Office

Office européen des brevets

(11) Veröffentlichungsnummer: **0 464 610 A2**

# EUROPÄISCHE PATENTANMELDUNG

(21) Anmeldenummer: **91110493.3**

(22) Anmeldetag: **25.06.91**

(51) Int. Cl.5: **H04M 1/57**, H04M 3/44, H04Q 3/62

(30) Priorität: **06.07.90 DE 4021539**

(43) Veröffentlichungstag der Anmeldung:
**08.01.92 Patentblatt 92/02**

(84) Benannte Vertragsstaaten:
**AT BE DE FR IT**

(71) Anmelder: **SIEMENS AKTIENGESELLSCHAFT**
**Wittelsbacherplatz 2**
**W-8000 München 2(DE)**

(72) Erfinder: **Lindemann, Werner, Dr. Ing.**
**Meistersingerweg 5**
**W-4330 Mülheim/Ruhr(DE)**

(54) **Verfahren zur Erzeugung einer Information für den gerufenen Teilnehmer in einem Kommunikationssystem, insbesondere Nebenstellenkommunikationssystem.**

(57) Unter der Voraussetzung, daß - wie dies in den digitalen Kommunikationsnetzen, insbesondere im integrierten Daten- und Fernsprechnetz (ISDN), der Fall ist - die Rufnummerndaten eines rufenden Teilnehmers unmittelbar dem gerufenen Endgerät bzw. der Nebenstellenanlage, an der dieses Endgerät angeschlossen ist, übergeben werden, findet ein Vergleich dieser Rufnummerndaten mit den in einer internen oder externen Datenbank enthaltenen Einträgen statt. Diese Datenbank enthält zumindest für eine bestimmte Anzahl von externen Fernsprechteilnehmern spezielle Informationen, die diese betreffenden Teilnehmer näher kennzeichnen. Hierzu gehören beispielsweise der Name, Geburtsdatum, Kundennummer und Adreßangaben. Falls die übergebene Rufnummer in der Datenbank abgespeichert ist, wird zumindest ein Teil dieser speziellen Informationen auf der Anzeigeeinrichtung (Display) des Endgerätes oder auch durch den mit Hilfe einer Druckvorrichtung vorgenommenen Ausdruck angezeigt. Als spezielle Form einer solchen Datenbank werden diejenigen Informationen verwendet, die für sogenannte Kurzwahlziele in einer Nebenstellenanlage zentral abgespeichert sind. Für diese mit einer vereinfachten Wahl zu erreichenden Ziele sind neben den jeweils zugehörigen vollständigen Rufnummerninformationen die Namen der betreffenden externen Teilnehmer abgespeichert. Stimmen die übergebenen Rufnummerndaten mit einer der abgespeicherten Rufnummern-Informationen überein, so wird der zugeordnete Name angezeigt. Auf diese Weise kann man ohne Mehraufwand für einen Speicherplatz für externe Teilnehmer, die in der Regel häufige Gesprachspartner darstellen, eine Namensanzeige realisieren.

Die Erfindung bezieht sich auf ein verfahren zur Erzeugung einer das Teilnehmerendgerät eines rufenden Teilnehmers bezeichnenden Information für den gerufenen Teilnehmer in einem Kommunikationssystem, insbesondere Nebenstellenkommunikationssystem, wobei im Rahmen des Verbindungsaufbaus die Rufnummerndaten des Endgerätes des rufenden Teilnehmers zumindest zu einer empfangsseitig die Verbindungsleitung abschließenden Schnittstelle übertragen werden.

In zeitgemäßen Kommunikationssystemen, insbesondere in Fernsprechnebenstellensystemen, sind eine Fülle unterschiedlicher Leistungsmerkmale bekannt, die einerseits im Rahmen des Kommunikationsdienstes "Sprache" den Bedienerkomfort steigern und auch andererseits über die Grundfunktionen der Vermittlung hinausgehende Verbindungsmöglichkeiten bieten. Ein Fernsprechnebenstellensystem kann über entsprechende Leitungssätze mit Netzübergängen zu analogen und/oder digitalen Nachrichteninformationsübertragung mit dem öffentlichen Telekommunikationsnetz und/oder mit anderen Fernsprechnebenstellenkommunikationssystemen verbunden werden. Derartige zeitgemäße Kommunikationssysteme ermöglichen neben der Übertragung von Sprachinformationen auch die parallel zu einer Sprechverbindung mögliche Übertragung von Steuerdaten. Hierfür sind unterschiedliche Kanäle vorgesehen, die getrennt durch verschiedene Zeitlagen physikalisch auf dem gleichen Übertragungsmedium realisiert sein können. Insbesondere in speziell ausgebildeten Nebenstellenkommunikationssystemen können die unterschiedlichen Übertragungskanäle auch durch jeweils getrennte Adernpaare gebildet werden.

Über den Steuerdaten- bzw. Signalisierungskanal werden beispielsweise in zeitgemäßen rechnergesteuerten digitalen Kommunikationsnetzen, insbesondere im integrierten Daten- und Fernsprechnetz (ISDN), im Rahmen eines Verbindungsaufbaus die Rufnummerndaten des Teilnehmerendgerätes des rufenden Teilnehmers übermittelt. Bezogen auf ein Fernsprechnebenstellensystem erfolgt diese Übermittlung zumindest zu einer die Leitungsperipherie bildenden Schnittstelleneinheit, die das Bindeglied zur zentralen Systemsteuerung darstellt. Unter Mithilfe dieser zentralen Systemsteuerung können dann bei Benutzung digitaler Endgeräte die übertragenen Rufnummerndaten optisch signalisiert werden.

Es ist die Aufgabe der Erfindung, im Zusammenhang mit einer solchen Übermittlung der Rufnummerndaten des Teilnehmerendgerätes eines rufenden Teilnehmers die Möglichkeiten für eine Instruktion eines gerufenen Fernsprechteilnehmers zu verbessern. Dies wird dadurch erreicht, daß wenigstens für eine vorbestimmte Anzahl von externen Teilnehmern zugehörigen Endgeräten in einer zentral oder dezentral vorgesehenen Speichereinrichtung in Zuordnung zu ihren darin eingespeicherten Rufnummerndaten für jeden dieser betreffenden Teilnehmer weitere, einen jeden von ihnen charakterisierende, spezifische Zusatzinformationen abgespeichert sind, daß die als entsprechende Signalisierungsinformationen übertragenen externen Rufnummerndaten zwischengespeichert werden und daß durch eine Steuereinheit, für die ein Zugriff auf die in der Speichereinrichtung enthaltenen Informationen ermöglicht ist, ein Vergleich der übertragenen Rufnummerndaten mit allen darin gespeicherten externen Rufnummerndaten nach vorgegebenen Vergleichsalgorithmen vorgenommen wird, daß - sofern der Vergleich eine Übereinstimmung der beiden Rufnummerndaten ergibt - durch diese Steuereinheit zur optischen Anzeige des rufenden Teilnehmers zumindest die Darstellung eines Teils der für diese erkannte Rufnummer abgespeicherten Zusatzinformationen veranlaßt wird.

Durch das vorgesehene Speichervolumen für die Speichereinrichtung kann der gewünschte Umfang der Zusatzinformationen an die Bedürfnisse entsprechend angepaßt werden. Die speziellen Informationen über vorbestimmte Teilnehmer können beispielsweise dessen Namen, Geburtsdatum, die Kundenbranche, die Kundennummer, Adreßangaben, usw. enthalten. Es kann diese Speichereinrichtung als interne oder externe Datenbank realisiert sein, so daß - bezogen auf eine Vielzahl von externen Teilnehmern - umfangreiche Zusatzinformationen darin enthalten sein können. Durch geeignete Vergleichsalgorithmen für den Vergleich der übergebenen Rufnummer mit den abgespeicherten Rufnummerndaten können auch Einzel-Bestandteile von Rufnummern ausgewertet werden. Sowohl in den Fällen, in denen die Speichereinrichtung in der Systemzentrale angeordnet ist als auch in den Fällen, in denen diese Speichereinrichtung im Endgerät selbst vorgesehen ist, hat unter der Voraussetzung eines geeigneten Endgerätes ein Teilnehmer in vorteilhafter Weise die Möglichkeit, für Gesprächspartner, zu denen häufig Fernsprechverbindungen hergestellt werden, die ihn interessierenden Zusatzinformationen in die betreffende Speichereinrichtung einzuschreiben. Diese flexiblen Gestaltungsmöglichkeiten sind als wesentlich für die Erfindung anzusehen.

Bei einem positiven Vergleichsergebnis können die darzustellenden Zusatzinformationen für den gerufenen Teilnehmer auf der Anzeigeeinrichtung seines Endgerätes angezeigt werden. Es kann aber auch vorgesehen sein, daß diese Zusatzinformationen durch den mit Hilfe einer angeschalteten Druckeinrichtung vorgenommenen Ausdruck angezeigt werden.

Gemäß einer Weiterbildung der Erfindung stellt die Speichereinrichtung, die die Zusatzangaben enthält, eine zentral angeordnete Teileinheit eines Nebenstellenkommunikationssystems dar, auf die die speicherprogrammierte Systemsteuerung zugreift. Diese Systemsteuerung nimmt dann den Vergleich der zu diesem Nebenstellenkommunikationssystem übertragenen Rufnummerndaten eines externen Teilnehmerendgerätes mit den in dieser zentralen Speichereinrichtung wahlweise abgespeicherten Rufnummern-Informationen vor. Eine besonders sinnvolle Weiterbildung der Erfindung besteht darin, daß die Speichereinrichtung diejenige darstellt, in der bei modernen Nebenstellenkommunikationssystemen die durch eine sogenannte Kurzwahl anzuwählen sind. Es sind in einem solchen Fall die jedem Ziel zuzuordnenden vollständige Langrufnummer und zusätzlich die jeweils dazugehörige Namensbezeichnung abgespeichert. Jede dieser abgespeicherten Rufnummern ist normalerweise durch die Wahl einer vorgegebenen verkürzten, z. B. zweistelligen Rufnummer oder durch einfachen Tastendruck einer entsprechend programmierten Taste der jeweiligen Endeinrichtung adressierbar. Bei der Auswahl einer solchen Rufnummer wird normalerweise der Name des betreffenden gerufenen Teilnehmers auf dem Display des jeweiligen Endgerätes angezeigt. Mit dem Inhalt des für eine sogenannte Kurzwahl vorhandenen Speichers wird nun erfindungsgemäß auch bei ankommenden Gesprächen eine Namensanzeige realisiert. Eine solche Namensanzeige kann immer dann erfolgen, wenn dem betreffenden rufenden Teilnehmer in dem Nebenstellenkommunikationssystem eine Kurzrufnummer zugeordnet ist. Dies ist insbesondere für solche Teilnehmer der Fall, mit denen durch die Teilnehmer des Nebenstellenkommunikationssystems häufig Gesprächsverbindungen stattfinden. Wird die übergebene Rufnummer des rufenden externen Teilnehmers nicht in dem betreffenden Speicher für Kurzwahlziele aufgefunden, so wird - wie üblich - lediglich die übergebene Rufnummer angezeigt. Für wichtige Gesprächspartner, denen Kurzwahlziele zugeordnet sind, kann erfindungsgemäß ohne Mehraufwand an Speicherplatz eine Namensanzeige erfolgen.

Es kann erfindungsgemäß vorgesehen sein, daß neben dem Speicher für die zentral gepflegten Kurzwahlziele ein weiterer Speicherbereich vorgesehen ist, in dem ein Teilnehmer die über eine Individuelle Kurzwahl zu erreichenden externen Teilnehmer mit der Rufnummer und Namensbezeichnung einschreiben kann.

Bei einem ankommenden Verbindungswunsch werden dann gegebenenfalls beide Speicherbereiche durchsucht. Voraussetzung für das individuelle Einschreiben ist das Vorhandensein eines Endgerätes mit einer alphanumerischen Tastatur.

Ein solches Endgerät ist auch bei einer Weiterbildung der Erfindung vorausgesetzt, bei der der Speicher, der die Rufnummern als auch die zugeordneten Namen bzw. weitere Zusatzinformationen enthält, im betreffenden Endgerät selbst vorhanden ist. Der Vergleich der zu dem Endgerät übertragenen Rufnummer des rufenden externen Teilnehmers mit den im Endgerät abgelegten Rufnummern wird durch die bei modernen Endgeräten vorhandene Steuereinheit im Endgerät selbst durchgeführt. Durch diese Steuereinheit wird dann bei einem positiven Vergleichsergebnis die Zusatzinformation unmittelbar auf dem Display angezeigt. Endgeräte mit einem solchen Funktionsumfang können nicht nur an einer Nebenstellenkommunikationsanlage angeschlossen sein, sie könnten auch direkt, beispielsweise hinter einem ISDN-Basisanschluß, betrieben werden.

Weitere vorteilhafte Ausgestaltungen der Erfindung sind den restlichen Unteransprüchen zu entnehmen.

Das erfindungsgemäße Verfahren wird nachstehend anhand einer Figur erläutert.

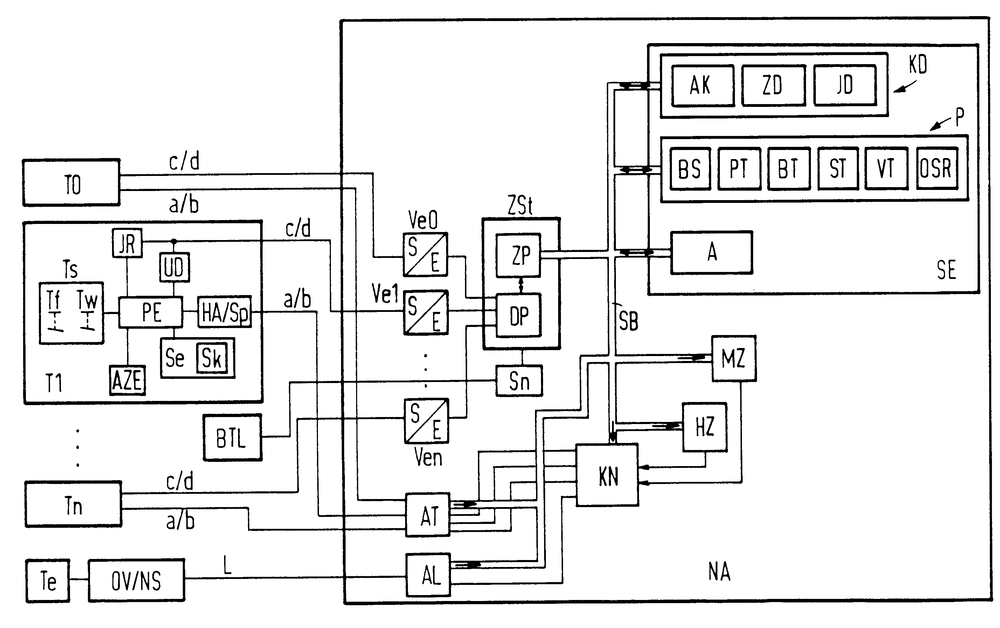

Die FIGUR zeigt im Blockschaltbild ausgewählte Funktionseinheiten einer Fernsprechnebenstellenanlage NA, an die Teilnehmerendeinrichtungen TO...Tn angeschlossen sind. Dieser Anschluß erfolgt im Ausführungsbeispiel bei einer Vermittlungsanlage, der die analoge Sprachübertragung zugrundegelegt ist, sternförmig über eine jeweils vieradrige Anschlußleitung, die aus einem Sprechadernpaar a/b und einem Signalisierungsadernpaar c/d besteht. Bei einem ausschließlich digitalen System sind die Steuerverbindung und die für die Übertragung der Sprachinformationen vorgesehene Nutzverbindung auf einer zweiadrigen Anschlußleitung realisierbar, wobei dann mindestens ein Nutzdatenkanal und ein Steuerdatenkanal für jede Endeinrichtung durch eine bestimmte Zeitlage realisiert werden kann. Zur im wesentlichen prozeduralen Anpassung werden die Teilnehmerendeinrichtungen TO...Tn über eine Anschalteeinheit AT, die auch die Rufanschaltung beinhaltet, mit der elektronischen Koppeleinrichtung KN verbunden. Für die zur einer öffentlichen Vermittlungsstelle OV oder zu einem privaten Netz NS führenden Leitungen L erfolgt die Verbindung über eine Anschalteeinheit AL. Ein Endgerät Te steht für das einem externen Teilnehmer zugehörige Endgerät.

Die Steuerungsaufgaben der Fernsprechnebenstellenanlage NA über-nimmt die zentrale Steuerrechnereinheit ZSt, die über einen Systembus SB mit einer Speichereinheit SE, der Anschalteeinheit AT, der Koppeleinrichtung KN und weiteren Systemkomponenten, wie beispielsweise einer für die Bildung von Mehrfrequenzcodezeichen dienenden Einheit MZ und einer für die Erzeugung der Hörtöne zuständigen Einheit HZ verbunden ist. Die Aufgaben der zentralen Steuerung ZSt sind im Ausführungsbeispiel auf zwei Prozessoren ZP und DP verteilt. Der Prozessor ZP dient beispielsweise der vermittlungs- und betriebstechnischen Steuerung. Durch den Prozessor DP erfolgt eine Aufbereitung und Zuteilung der Steuerdaten. Die Signalisierungsbearbeitung erfolgt unter Einschaltung der ein Sendeteil S und ein Empfangsteil E enthaltenden Verarbeitungseinheit Ve. Solche Verarbeitungseinheiten VeO...Ven sind jeweils einem Signalisierungsadernpaar c/d zugeordnet. Die Prozessoren ZP und DP haben über den Systembus SB Zugriff zu den in der Speichereinrichtung SE abgelegten Daten. Die Speichereinrichtung SE besteht aus einem Programmspeicher P, einem Kundendatenspeicher KD und aus einem Arbeitsspeicher A. Im Programmspeicher P sind das Anlagenbetriebsprogramm BS und die zu ihm bezüglich der Peripherietechnik PT, der Betriebstechnik BT, der Sicherheitstechnik ST und der Vermittlungstechnik VT gehörigen Programme abgespeichert. Weiterhin sind darin noch die der Benutzeroberfläche OSR zuzuordnenden Programme enthalten. In dem Speicherteil KD sind die Kundendaten, wie z. B. die den einzelnen Teilnehmerendeinrichtungen TO...Tn zugeteilten Berechtigungen abgelegt. Das Konfigurieren dieser Daten kann z. B. über die Eingabetastatur einer als Betriebsterminal festlegbaren Endeinrichtung oder über ein gegebenenfalls vorgesehenes eigenständiges Betriebsterminal BTL, das über die Schnittstelleneinrichtung Sn angeschlossen ist, erfolgen. Dieser Kundendatenspeicher kann beispielsweise auch zentrale, sogenannte, von alen Teilnehmern anwählbare Kurzwahlziele enthalten. Der Arbeitsspeicher A dient u. a. der Aufnahme von temporären Daten zur Programmablaufsteuerung.

Für die Teilnehmerendeinrichtungen T1 sind in der FIGUR einzelne Funktionskomponenten dargestellt. Über das jeweilige a/b-Adernpaar werden die Sprachinformationen übertragen. Mit diesen Sprechadern ist die Sprechschaltung Sp verbunden. Sie dient im Zusammenhang mit dem Handapparat HA der Verarbeitung der übertragenen Sprachinformationen und bildet den Leitungsabschluß. Mit der Einheit Ts ist schematisch eine Tastatur dargestellt, die mit einer in jeder als Systemteilnehmerstelle ausgebildeten Endeinrichtung zur Steuerung ihrer Funktion vorhandenen und z.B. durch eine Prozessor realisierten Steuereinheit PE gekoppelt ist. Die Taste Tw symbolisiert eine übliche Wähltastatur. Die Taste Tf steht für eine Reihe von weiteren Tasten, insbesondere sogenannten Funktionstasten, denen durch entsprechende betriebstechnische Anweisungen unterschiedliche Funktionen zugeordnet werden können. Durch deren Betätigung sind bestimmte Funktionsabläufe aktivierbar, z. B. die mittels des Anlagenbetriebsprogramms realisierbaren Leistungsmerkmale. Eine Taste Tf kann auch eine frei programmierbare Taste darstellen. Durch eine vorgegebene Prozedur kann z. B. festgelegt sein, daß bei ihrer Betätigung die Aussendung einer zentral abgespeicherten Rufnummer vorgenommen wird.

Mit der beispielsweise durch einen Prozessor realisierten Steuereinheit PE sind ferner die Einheiten IR, UD, Se, Sk und AZE verbunden. Die Einheit IR erkennt die Betätigung einzelner Tasten im Tastenfeld Ts, meldet entsprechende Signalisierungsinformationen und gibt diese über die Signalisierungsadern c/d an die Nebenstellenanlage NA oder an die der Teilnehmerendeinrichtung zugeordneten Anzeigeeinrichtung AZE ab. Diese Anzeigeeinrichtung ist beispielsweise durch ein LCD-Display realisiert. Sie ist allgemein für die Anzeige von Ziffern-, Text- und Wahlinformationen vorgesehen.

Die Einheit UD registriert diejenigen Funktionen, die einer Teilnehmerendeinrichtung über die jeweiligen c/d-Signalisierungsadern von der Nebenstellenanlage NA zur weiteren Verarbeitung zugeführt werden. Die Einheit Se ist als Speicher ausgebildet und dient beispielsweise der Aufnahme eines Betriebsprogrammes für die Steuereinheit PE und zwischenzuspeichernder Daten. Es ist für den Speicher ein weiterer Speicherbereich Sk vorgesehen, in dem beispielsweise durch den betreffenden Teilnehmer im Zusammenhang mit einer möglichen Kurzwahl die individuellen Kurzwahlziele ergänzt durch zusätzliche Angaben, wie beispielsweise Namen und Adreßangaben, eingetragen werden können. Dies setzt jedoch das Vorhandensein einer alphanumerischen Tastatur voraus.

In modernen Nebenstellenkommunikationssystemen ist üblicherweise die sogenannte zentrale Kurzwahl vorgesehen. Die damit durch eine vereinfachte Wahl zu erreichenden Ziele, d. h. externe Fernsprechendgeräte, können beispielsweise in dem Speicherbereich ZD des Kundendatenspeicher KD abgespeichert sein. Für jedes zu erreichende Ziel sind darin neben der jeweils zugehörigen vollständigen Rufnummerninformation zumindest der Name des betreffenden externen Teilnehmers enthalten. Für eine gewünschte Auswahl einer diese darin enthaltenen Rufnummern werden die betreffenden Speicherplätze durch einfache Tastendrücke oder durch die Einwahl zugeordneter Kurzrufnummern adressiert. Durch die zentrale Steuerung ZSt wird im gehenden Verkehr in einem solchen Fall veranlaßt, daß dem Endgerät des Nebenstellenteilnehmers eine Information übermittelt wird, die zumindest die Darstellung des Namens des angewählten externen Teilnehmers erlaubt. Diese Übermittlung erfolgt über den Steuerdatenkanal, der im Ausführungsbeispiel durch das c/d-Adernpaar realisiert ist. In umgekehrter Richtung werden über dieses Adernpaar die bei Betätigung einer Taste abgeleiteten Anforderungsinformationen zu der Zentrale der Nebenstellenanlage NA übermittelt. Diese Anforderungen bzw. Informationseingaben werden bei der zyklischen Bearbeitung der einzelnen Teilnehmerendeinrichtungen durch den zentralen Prozessor ZP erkannt. Die im Bereich ZD des Kundendatenspeichers KD abzuspeichernden zentralen Kurzwahlziele werden systemweit z. B. durch Personalcomputer-Unterstützung gepflegt. Dies erfolgt grundsätzlich gemeinsam für alle Teilnehmer des Nebenstellenkommunikationssystems NA. Es ist nun erfindungsgemäß vorgesehen, daß die im Speicherbereich ZD im Zusammenhang mit einer möglichen Kurzwahl enthaltenen Informationen nicht nur bei gehenden Gesprächen, sondern auch bei kommenden Gesprächen ausgewertet werden. Voraussetzung hierfür ist, daß - wie dies in den digitalen Kommunikationsnetzen, insbesondere im integrierten Daten- und Fernsprechnetz (ISDN) der Fall ist - im Rahmen eines Verbindungsaufbaus durch einen externen Teilnehmer, beispielsweise Teilnehmer Te, durch die jeweils zuständige Vermittlungsanlage diesen Rufnummerndaten zu dem gerufenen Teilnehmer bzw. zu der Nebenstellenanlage NA übermittelt wird, an der der gerufene Teilnehmer angeschlossen ist. Die Rufnummer eines rufenden Teilnehmers Te kann also entweder von einer öffentlichen Vermittlungsstelle OV oder von einem anderen Nebenstellenkommunikationssystem NS übergeben werden. Diese übergebene Rufnummer wird von der Anschalteeinheit AL empfangen und vom Zentralprozessor ZP im Arbeitsspeicher A abgelegt. Es wird nun der Speicherbereich ZD daraufhin durchsucht, ob er diese aktuell abgelegte Rufnummer enthält. Ist dies der Fall, so wird die darin für den betreffenden externen Teilnehmer abgespeicherte Zusatzinformation in einem geeigneten Datenformat zu dem Endgerät des gerufenen Teilnehmers übertragen und dort mit Hilfe der in diesem Endgerät vorhandenen Steuereinheit PE auf der Anzeigeeinrichtung AZE dargestellt. Sollte für den Speicherbereich ZD ein entsprechendes Speichervolumen vorgebbar sein, so können neben den Namen der betreffenden Teilnehmer auch noch weitere Zusatzangaben, u. a. beispielsweise Adreßangaben, Geburtsdatum, Kundenbranche und Kundennummer, usw. zentral abgespeichert werden. Die in diesem Speicherbereich abgespeicherten Teilnehmer werden in der Regel solche Teilnehmer sein, die häufig Gesprächspartner für eine Mehrzahl der Teilnehmer der Nebenstellenanlage NA sind. Für diese kann also auch bei kommenden Gesprächen ohne zusätzlichen Aufwand an Speicherplatz eine Namensanzeige des jeweils rufenden externen Teilnehmers ermöglicht werden. Es kann in dem Kundendatenspeicher KD ein weiterer Speicherbereich ID vorgesehen sein, in dem endgerätebezogen durch einen Teilnehmer persönliche Ziele mit den dazugehörigen Zusatz-Informationen eingespeichert werden können. Die Speicherbereiche ZD und ID enthalten demnach Daten, die durch den Betreiber der Nebenstellenanlage bzw. durch einzelne Teilnehmer verändert werden können, während in dem Speicherbereich AK Anlagenkonfigurationsdaten abgelegt sind, die nicht ohne weiteres verändert werden können.

Wird eine externe Rufnummer übergeben, so werden sowohl der Speicherbereich ZD als auch der individuell, mit Informationen bestückbare Speicherbereich ID daraufhin durchsucht, ob die betreffende Nummer darin enthalten ist. Ist dies der Fall, werden - wie bereits geschildert - die zugeordneten Zusatzangaben auf dem Display des gerufenen Teilnehmers dargestellt. Der für den Vergleich heranzuziehende Programmbaustein befindet sich im Programmspeicher P des Nebenstellenkommunikationssystems NA, z.B. in dem der Benutzeroberfläche zuzuordnenden Programmodul OSR oder in dem der Vermittlungstechnik zuzuordnenden Programmodul VT.

Der Speicherbereich ZD des Kundendatenspeichers KD kann als eine spezielle Form einer Datenbank angesehen werden, in der für einzelne Teilnehmer Zusatzinformationen abgespeichert sind, die diesen jeweiligen Teilnehmer in der bereits erwähnten Weise ausführlicher kennzeichnen. Es ist denkbar, daß eine solche Datenbank, nicht wie dies geschildert wurde, auf Kurzwahlzielen basiert, sondern auf eigenständigen Daten, beispielsweise auf einem abgespeicherten Telefonverzeichnis.

Es ist auch möglich, daß das Nebenstellenkommunikationssystem NA für eine Bewertung einer z. B. in ISDN-System übertragenen Rufnummer eines rufenden Teilnehmers auf eine Datenbank zurückgreift, die auf einem Zusatzgerät, wie z. B. einem Personalcomputer, abgelegt ist.

Es ist auch denkbar, daß durch geeignete Vergleichsalgorithmen Einzelbestandteile von Rufnummern ausgewertet werden. Falls nicht letztlich ein Teilnehmername abgelegt ist, könnte zumindest der Ortsname oder der Firmenname angezeigt werden.

Unter der Voraussetzung, daß ein Endgerät - wie dies bei komfortablen Endgeräten der Fall ist - eine alphanumerische Tastatur aufweist, besteht die Möglichkeit, daß sowohl die Rufnummern der externen Teilnehmer als auch die zugeordneten Namensbezeichnungen bzw. weitere Zusatzinformationen in entsprechenden Speichern im Endgerät selbst abgelegt sind. Die abgespeicherten Informationen sind dann individuell durch den Einzelnutzer zu pflegen. Der Vergleich der gemäß dem Endgerät übermittelten Rufnummer mit dem in diesem Endgerät abgelegten Rufnummern wird durch die im Endgerät vorhandenen Steuereinheit PE vorgenommen. Wird eine Übereinstimmung festgestellt, so sind die abgespeicherten Zusatzinformationen, die den rufenden Teilnehmer zusätzlich charakterisieren, durch die Anzeigeeinrichtung AZE anzeigbar.

**Patentansprüche**

1. Verfahren zur Erzeugung einer das Teilnehmerendgerät eines rufenden Teilnehmers (T1) bezeichnenden Information für den gerufenen Teilnehmer (T1) in einem Kommunikationssystem, insbesondere Fernsprechnebenstellensystem, wobei im Rahmen des Verbindungsaufbaus die Rufnummerndaten des Endgerätes des rufenden Teilnehmers zumindest zu einer empfangsseitig die Verbindungsleitung abschließenden Schnittstelle (AL) übertragen werden,
   **dadurch gekennzeichnet,**
   daß wenigstens für eine vorbestimmte Anzahl von externen Teilnehmern (Te) zugehörigen Endgeräten, in einer zentral oder dezentral vorgesehenen Speichereinrichtung (KD bzw. Sk) in Zuordnung zu ihren darin eingespeicherten Rufnummerndaten für jeden dieser betreffenden Teilnehmer weitere, einen jeden von ihnen charakterisierende, spezifische Zusatzinformationen abgespeichert sind, daß die als entsprechende Signalisierungsinformationen übertragenen externen Rufnummerndaten zwischengespeichert werden und daß durch eine Steuereinheit (ZSt), für die ein Zugriff auf die in der Speichereinrichtung (KD) enthaltenen Informationen ermöglicht ist, ein Vergleich der übertragenen Rufnummerndaten mit allen darin gespeicherten externen Rufnummerndaten nach vorgegebenen Vergleichsalgorithmen vorgenommen wird, daß - sofern der Vergleich eine Übereinstimmung der beiden Rufnummerndaten ergibt - durch diese Steuereinheit zur optischen Anzeige des rufenden Teilnehmers zumindest die Darstellung (AZE) eines Teils der für diese erkannte Rufnummer abgespeicherten Zusatzinformationen veranlaßt wird.

2. Verfahren nach Anspruch 1,
   **dadurch gekennzeichnet,**
   daß bei einem positiven Vergleichsergebnis die darzustellenden Zusatzinformationen einer Anzeigeeinrichtung (AZE) des Endgerätes (T1) für den Teilnehmer angezeigt wird.

3. Verfahren nach Anspruch 1,
   **dadurch gekennzeichnet,**
   daß das Ergebnis des vorgenommenen Vergleich durch einen mit Hilfe einer angeschalteten Druckeinrichtung vorgenommenen Ausdruck angezeigt wird.

4. Verfahren nach einem vorhergehenden Ansprüche,

**dadurch gekennzeichnet,**
daß die Speichereinrichtung eine zentral angeordnete Teileinheit (KD) eines Nebenstellenkommunikationssystems (NA) darstellt, auf die die speicherprogrammierte Systemsteuerung (ZSt) zugreift und daß diese Systemsteuerung den Vergleich der zu diesem Nebenstellenkommunikationssystem (NA) übertragenen Rufnummerndaten mit den in dieser zentralen Speichereinrichtung (KD) wahlweise abgespeicherten Informationen vornimmt.

5. Verfahren nach Anspruch 4,
   **dadurch gekennzeichnet,**
   daß die Speichereinrichtung diejenige Speichereinrichtung (KD) darstellt, in der die für die Teilnehmer eines Nebenstellenkommunikationssystems (NA) durch sogenannte Kurzwahl anzuwählende Ziele durch die einem jeden Ziel zuzuordnende vollständige Rufnummer und zusätzlich durch die jeweils zugehörige Namensbezeichnung des externen Teilnehmers abgespeichert sind und wobei jede abgespeicherte Information durch Einwahl einer vorgegebenen Kurzrufnummer oder unmittelbar durch einfachen Tastendruck einer entsprechend programmierten Taste (Tf) der jeweiligen Endeinrichtung adressierbar sind.

6. Verfahren nach Anspruch 5,
   **dadurch gekennzeichnet,**
   daß - sofern das jeweilige Endgerät eine alphanumerische Tastatur aufweist - für den betreffenden Teilnehmer (T1) neben dem für alle Teilnehmer (TO...Tn) gemeinsamen Speicherabschnitt (ZD) zusätzlich ein weiterer Speicherabschnitt (ID) der zentralen Speichereinrichtung (KD) zugeordnet ist, in dem die Rufnummer und zumindest die Namensbezeichnung eines über eine individuelle Kurzwahl zu erreichenden externen Teilnehmers (Te) individuell einschreibbar sind, daß bei einem ankommenden Verbindungswunsch für den Vergleich mit den übertragenen Rufnummerndaten zunächst die Informationen des einen Speicherabschnitts (ZD) und bei einem negativen Vergleichsergebnis die in dem anderen Speicherabschnitt (ID) enthaltenen Informationen nacheinander für den Vergleich herangezogen werden.

7. Verfahren nach Anspruch 1,
   **dadurch gekennzeichnet,**
   daß im Endgerät (T1) selbst ein Speicherbereich (Sk) eine Speichereinrichtung (Se) vorgesehen ist, in die - sofern dieses Endgerät eine alphanumerische Tastatur aufweist - vom jeweiligen Teilnehmer auch im Sinne einer zu erstellenden Datenbank Rufnummern und die ihnen jeweils zugehörigen Zusatzinformationen einschreibbar sind, daß bei jedem von einem externen Teilnehmer ausgehenden Verbindungsversuch dessen Rufnummerndaten zu dem Endgerät (T1) des gewünschten Teilnehmers übertragen werden und daß im Endgerät durch eine ihm zugehörige Steuereinheit (PE) der Vergleich mit den in dem Speicherbereich (Sk) enthaltenen Informationen vorgenommen wird, daß bei einem positiven Ergebnis zumindest die Namensbezeichnung des externen Teilnehmers einer im Endgerät vorhandenen Anzeigeeinrichtung (AZE) angezeigt wird.

8.  Verfahren nach einem der vorhergehenden Ansprüche,
    **dadurch gekennzeichnet,**
    daß die für den Vergleich herangezogenen Informationen in einer Datenbank abgespeichert sind und daß diese Informationen unabhängig von vorgesehenen Kurzwahlzielen in Form eines allgemeinen Telefonverzeichnisses abgespeichert sind.

9.  Verfahren nach einem der vorhergehenden Ansprüche 1 bis 7,
    **dadurch gekennzeichnet,**
    daß die für einen Vergleich herangezogenen Informationen in der einem Zusatzgerät zugehörigen Datenbank abgespeichert sind, zu dem die zentrale Systemsteuerung (ZSt) des Fernsprechnebenstellenkommunikationssystems (NA) Zugriff hat.